# EUROPEAN PATENT SPECIFICATION

(11) **EP 2 339 666 B1**
(45) Date of publication and mention of the grant of the patent: **30.11.2016**
(21) Application number: 10252081.4
(22) Date of filing: 08.12.2010
(51) Int. Cl.: H01M 2/16, H01M 10/052, H01M 10/0587, H01M 4/13, H01M 4/131

(54) **Lithium secondary battery**
Lithium Sekundärbatterie
Batterie secondaire au lithium

(30) Priority: 08.12.2009 KR 20090121394
(43) Date of publication of application: 29.06.2011
(73) Proprietor: Samsung SDI Co., Ltd., Yongin-si, Gyeonggi-do (KR)
(72) Inventor: Shin, Jeong-Soon, Yongin-si Gyeonggi-do (KR)
(74) Representative: Mounteney, Simon James

(56) References cited:
- EP-A2- 1 030 397
- EP-A2- 1 758 199
- CA-A1- 2 678 593

## Description

### BACKGROUND

### 1. Field

The present invention relates to a lithium secondary battery having an improved internal structure.

### 2. Description of the Related Art

Demand for portable electronic devices, such as camcorders, portable computers, and mobile phones, has recently increased. As such, much research into secondary batteries used to power the same has been carried out. Examples of currently developed secondary batteries include nickel-metal hydride (Ni-MH) batteries, lithium-ion batteries, and lithium-ion polymer batteries. Lithium (Li), which is commonly used as a material for the secondary battery, has small atomic weight and thus, is appropriate for manufacturing a battery having a large electric capacity per unit mass. Also, lithium (Li) intensely reacts with water, so that a non-aqueous electrolyte is used in a lithium-based battery. In this regard, such a lithium-based battery is not affected by a water electrolysis voltage and thus, may generate an electromotive force of 3 to 4 V.

A lithium secondary battery generally includes two electrodes and a separator that prevents a short between the two electrodes. The two electrodes and the separator are stacked or wound together and are put in a case with a non-aqueous electrolyte. Electrode tabs extend from the electrodes and are connected to electric terminals.

A non-aqueous electrolyte used in a lithium-ion secondary battery may be a liquid electrolyte or a solid electrolyte. The liquid electrolyte is obtained by dissociating a lithium salt in an organic solvent. Examples of the organic solvent may include ethylene carbonate, propylene carbonate, alkyl group-containing carbonates, and similar organic compounds. The solid electrolyte is permeable to lithium ions and may be classified as an organic solid electrolyte formed of a polymer material and an inorganic solid electrolyte formed of a crystalline or amorphous organic material. The solid electrolyte itself is not generally electrically conductive. Thus, the solid electrolyte itself may operate as a separator.

A separator prevents a short between two electrodes in a battery and is permeable to ions of an electrolyte. Accordingly, the separator restricts the free motion of lithium ions between electrodes. If the separator does not have sufficient permeability and wettability with respect to the electrolyte, the transfer of the lithium ions between the two electrodes is impeded. Accordingly, the porosity, wetability, ionic conductivity, heat resistance, heat deflection resistance, chemical resistance, and mechanical strength of a separator are important with regard to battery performance.

In addition, when manufacturing an electrode assembly, the surface area of a negative electrode active material layer is generally larger than the surface area of a positive electrode active material layer, and a separator interposed therebetween is generally larger than the positive electrode and/or negative electrode, in order to prevent a short from occurring. Thus, due to these size differences, a separator may be difficult to arrange during manufacturing of an electrode assembly. Thus, manufacturing difficulties may result. EP1758199, EP1030397, CA2678593, WO2009/029746, WO2008011061 and US6432586 relate to lithium secondary batteries.

### SUMMARY

The present invention sets out to provide a secondary battery that overcomes the above problems of the prior art

Accordingly, the invention provides a lithium secondary battery as set out in Claim 1.

The lithium battery according to the present invention includes: a positive electrode including a positive electrode active material layer; a negative electrode including a negative electrode active material layer; an electrolyte; and an inorganic insulating separator coating layer coated on the first electrode active material layer (23), to separate the first (20) and the second electrodes (3).

The positive electrode active material layer and the negative electrode active material layer are substantially the same size, and the lengths and widths of the positive electrode and the negative electrode are substantially the same, in order to facilitate an arrangement of the positive and negative electrodes.

According to one or more embodiments of the present disclosure, the negative electrode active material layer may include lithium titanium oxide (LTO). The LTO may be Li₄Ti₅O₁₂.

According the present invention, the inorganic insulating separator coating layer includes a ceramic material. The porosity of the inorganic insulating separator coating layer may be from about 10 % to about 50 %.

According to one or more embodiments of the present disclosure, inorganic insulating separator coating layer may be coated directly on the positive electrode active material layer and/or the negative electrode active material layer.

According to one or more embodiments of the present disclosure, the positive electrode active material layer and the negative electrode active material layer may include a first binder and the inorganic insulating separator coating layer may include a second binder. The first and second binders may each be a different one of an oil-based binder and a water-based binder.

According to the present invention, the negative electrode active material layer includes a material having a potential difference of at least 0.5 V with respect to lithium. The lithium secondary battery may further include a separator interposed between the positive electrode and the negative electrode.

According to one or more embodiments of the present disclosure, the lithium secondary battery may be a stack-type lithium secondary battery, in which surface areas and/or shapes of the positive electrode and the negative electrode are the same.

The present invention is set out in the appended claims.

Additional aspects and/or advantages of the present disclosure will be set forth in part in the description which follows and, in part, will be obvious from the description, or may be learned by practice of the present disclosure.

### BRIEF DESCRIPTION OF THE DRAWINGS

These and/or other aspects and aspects of the disclosure will become apparent and more readily appreciated from the following description of the exemplary embodiments, taken in conjunction with the accompanying drawings, of which:
FIGS. 1A through 1H illustrate a method of manufacturing an electrode assembly of a stack-type lithium secondary battery, according to an embodiment of the present invention;
FIGS. 2A through 2D are cross-sectional views of modified versions of the electrode assembly of FIG. 1 H;
FIGS. 3A through 3D illustrate a method of manufacturing an electrode assembly of a stack-type lithium secondary battery, according to another embodiment of the present invention;
FIGS. 4A and 4B are cross-sectional views of modified versions of the electrode assembly of FIG. 3D;
FIG. 5 is a cross-sectional view of a cylindrical lithium secondary battery;
FIG. 6 is a conceptual view schematically illustrating widths of a positive electrode and a negative electrode of the cylindrical lithium secondary battery of FIG. 5;
FIGS. 7A through 7E illustrate a method of manufacturing an electrode assembly of a cylindrical lithium secondary battery, according to another embodiment of the present invention;
FIGS. 8A through 8D are plan views of wound the electrode assemblies, according to aspects of the present disclosure; and
FIGS. 9A through 9C illustrate a method of manufacturing an electrode assembly of a cylindrical lithium secondary battery, according to another embodiment of the present invention.

### DETAILED DESCRIPTION

Reference will now be made in detail to embodiments of the present invention, examples of which are illustrated in the accompanying drawings, wherein like reference numerals refer to the like elements throughout. The embodiments are described below, in order to explain the aspects of the present invention, by referring to the figures.

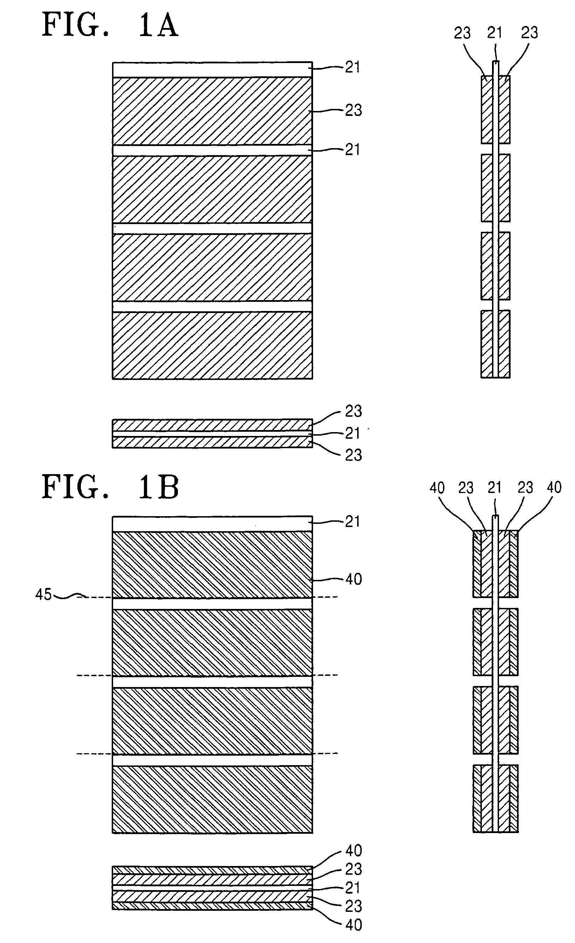

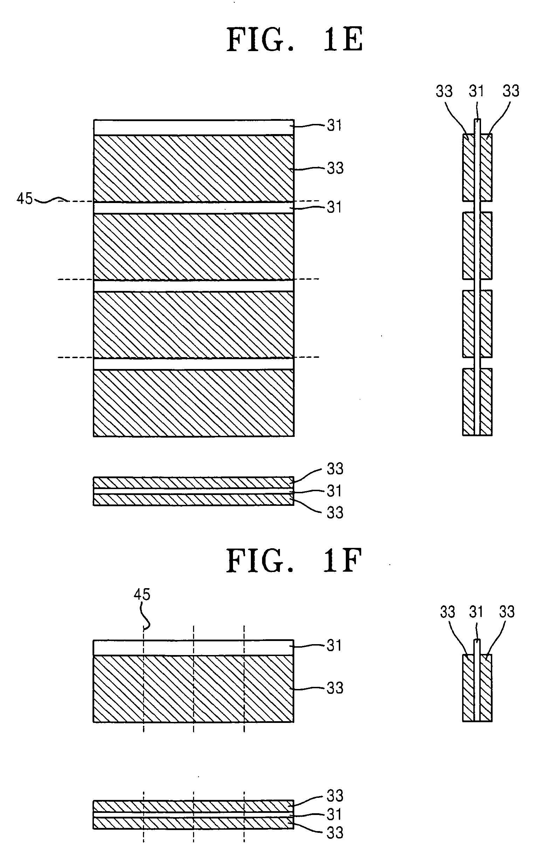

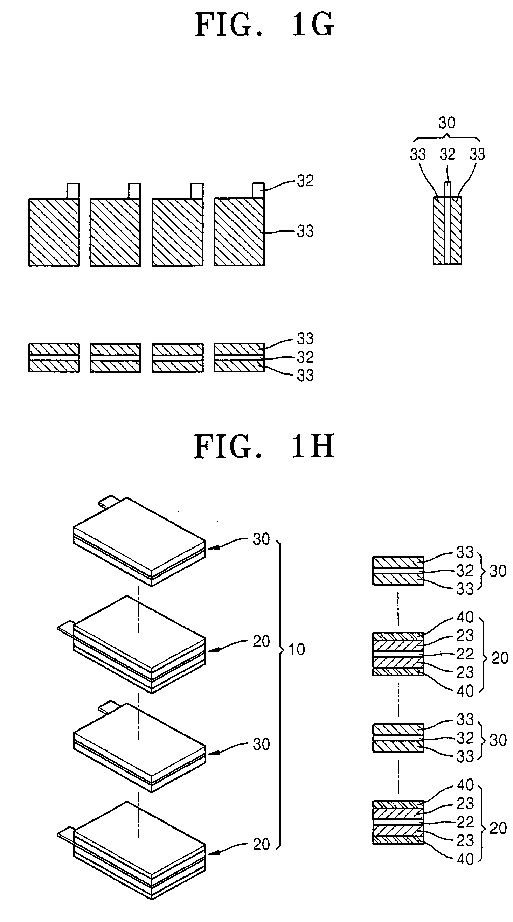

FIGS. 1A through 1H illustrate a method of manufacturing an electrode assembly 10 of a stack-type lithium secondary battery, according to an embodiment of the present invention. FIGS. 1A through 1G each include a plan view, a front view, and a side view of the components of the electrode assembly 10, during manufacturing. FIG. 1H includes a perspective view and a front view of the electrode assembly 10. Referring to FIG. 1H, the electrode assembly 10 includes negative electrodes 20 and positive electrodes 30. The negative electrodes 20 each include a negative electrode current collector 22, a negative electrode active material layer 23, and an inorganic insulating separator coating layer 40. The positive electrodes 30 each include a positive electrode current collector 32 and a positive electrode active material layer 33.

The negative electrodes 20 and the positive electrodes 30 are substantially the same size, i.e., have substantially the same surface area. The negative electrode 20 may include lithium. Conventionally, a negative electrode active material layer is larger than a positive electrode active material layer, due to a potential difference between lithium and the negative electrode active material layer. Since the potential difference between lithium and the negative electrode active material layer is only 0.1 V, lithium metal may be easily extracted during charging. In order to prevent lithium metal extraction, which may cause instability, a general negative electrode active material layer is larger than the positive electrode active material layer. Accordingly, it is difficult to arrange a negative electrode and a positive electrode, due to the size differences. Thus, the processability of an electrode assembly is reduced.

However, according to the current embodiment of the present invention, the negative electrode active material layer 23 includes an active material having a potential difference of at least 0.5 V with respect to lithium. Therefore, even though the negative electrode active material layer 23 and the positive electrode active material layer 33 are substantially the same size, lithium is not substantially extracted. Accordingly, the surface area of the negative electrode active material layer 23 may be the same as that of the positive electrode active material layer 33, and amounts of the active materials included therein may be the same. In addition, the sizes (surface areas) of the negative electrode 20 and the positive electrode 30 may be substantially the same.

The negative electrode active material layer 23 includes a lithium titanium oxide (LTO). The LTO may be Li₄Ti₅O₁₂ or Li₃Ti₅O₁₂. The negative electrode active material layers 23 are coated on opposing sides of the negative electrode current collector 22. However, the negative electrode active material layer 23 may alternatively be disposed on only one side of the negative electrode current collector 22.

The inorganic insulating separator coating layers 40 may be disposed on the outermost surfaces of the negative electrodes 20. For example, in FIG. 1H, the inorganic insulating separator coating layers 40 are disposed on outer sides of the negative electrode active material layers 23. As such, the inorganic insulating separator coating layer 40 prevents a short between the negative electrodes 20 and the positive electrodes 30, without the use of an additional separator. Thus, lithium ion transfer may be improved. The inorganic insulating separator coating layer 40 may include, for example, a ceramic material. The inorganic insulating separator coating layer 40 may physically prevent lithium extraction from the surface of the negative electrodes 20. That is, the inorganic insulating separator coating layer 40 is disposed on the surface of the negative electrodes 20, to suppress the formation of lithium dendrites, thereby suppressing lithium extraction. If lithium is extracted, the extracted lithium may be contained within the inorganic insulating separator coating layer 40. Thus, as the inorganic insulating separator coating layer 40 includes a ceramic material, lithium extraction problems may be prevented.

The negative electrode active material layer 23 of the present invention includes an active material having a potential difference of 0.5 V or more, with respect to lithium. The inorganic insulating separator coating layer 40 physically prevents lithium extraction from the surface of the negative electrodes 20. As the negative electrode active material layer 23 includes an active material having a potential difference of 0.5 V or more, lithium is not substantially extracted. The inorganic insulating separator coating layer 40 further protects against that lithium is extracted.

Here, porosity denotes a ratio (%) of empty space in an arbitrary cross-section of an electrode or coating layer and thus, is an indicator of the degree of electrolyte permeation into between two electrodes in the inorganic insulating separator coating layer 40. If the inorganic insulating separator coating layer 40 includes a ceramic material, the porosity thereof may be about 10 % to about 50 %. The porosity of the ceramic material may be controlled by changing the viscosity of a slurry that is coated on the electrode layers, to form the coating layer 40. However, controlling the porosity is not limited thereto, and it would be obvious to one of ordinary skill in the art that the porosity may be controlled using various other methods.

Hereinafter, a method of manufacturing the electrode assembly 10 of the stack-type lithium secondary battery will be described. The negative electrodes 20 and the positive electrodes 30 have substantially the same size (surface area) and shape. As such, the negative electrode current collector 22 and the positive electrode current collector 32 have substantially the same size and shape. In particular, as shown in FIG. 1H, the lengths and widths of the positive and negative electrodes 30, 20 may be substantially the same or identical. Also, the negative electrode current collector 22 and the positive electrode current collector 32 may have the same shape and/or surface area.

Referring to FIG. 1A, the negative electrode active material layers 23 are disposed on a sheet of negative electrode current collector material 21. Specifically, a slurry including a first bind (binding resin) and an active material is applied to both sides of the sheet 21, to form the negative electrode active material layers 23. Referring to FIG. 1B, the inorganic insulating separator coating layers 40 are formed on the negative electrode active material layers 23. Here, the inorganic insulating separator coating layer 40 may include a second binder (binding resin). If the first binder is a water-based binder, the second binder may be an oil-based binder, and vice versa.

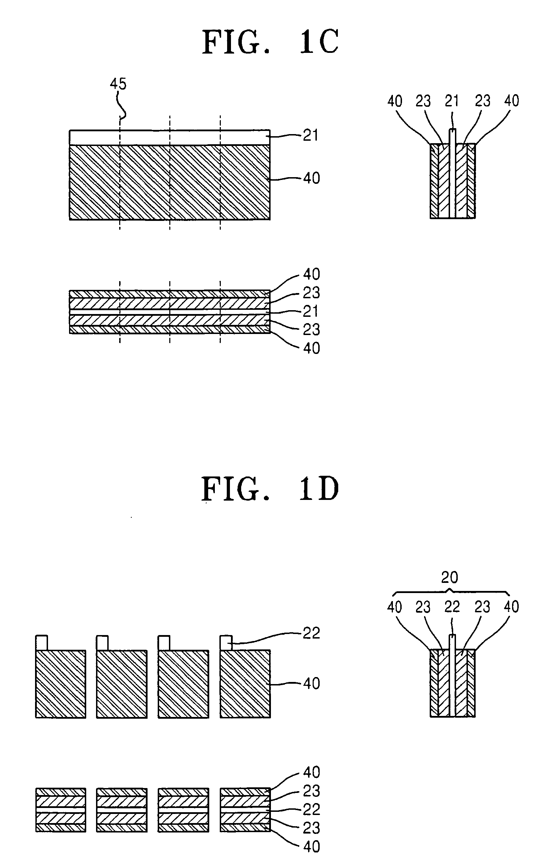

In FIG 1B, after the inorganic insulating separator coating layer 40 is formed, the resultant is cut along a cutting line 45 disposed in uncoated regions thereof, to form a resultant shown in FIG. 1C. The resultant is cut along cutting lines 45, to form the stack-type negative electrodes 20 of FIG. 1D. The inorganic insulating separator coating layer 40 increases the thickness of the positive electrode 30 and the negative electrode 20 and thus, a burr is hardly generated during the cutting. If a burr is generated, there is a low possibility that the burr appears on the surface. In addition, there is a low possibility that the inorganic insulating separator coating layer 40 is pierced by the burr and/or a short is produced. Thus, safety of a battery may be improved. Also, a process of attaching a separating laminating tape may be omitted.

Referring to FIGS. 1E-1G, the positive electrode 30 may be manufactured in a similar manner as in the negative electrode 20. In particular, the positive electrode active material layers 33 are formed on a sheet of the positive electrode current collector material 31, by coating a slurry including a binding resin (binder) and an active material on the sheet 33. The binder of the positive electrode active material layers 33 may be a water-based binder or an oil-based binder, so long as it is a different type of binder than the second binder of the inorganic insulating separator coating layer 40, as recited above.

The stack-type negative electrodes 20 and positive electrodes 30 are alternately stacked, as shown in FIG. 1H, thereby completing manufacturing of the electrode assembly 10 of the stack-type lithium secondary battery. The negative electrode active material layers 23 and the positive electrode active material layers 33 are the same size and shape. The negative electrodes 20 and the positive electrodes 30 are also the same size and shape. Accordingly, the negative electrodes 20 and the positive electrodes 30 may be easily arranged, and the manufacturing processability the electrode assembly 10 is improved. The order in which the negative electrodes 20 and the positive electrodes 30 are stacked may be changed, so as to be sequentially stacked. The present disclosure is not limited to the configuration of the electrode assembly 10 shown in FIG. 1H.

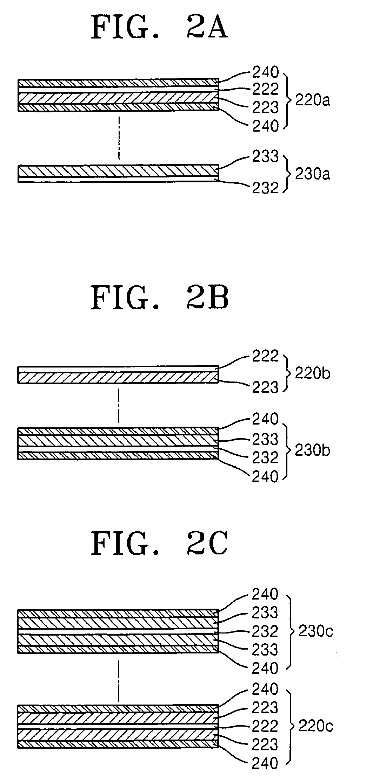

FIGS. 2A through 2D are cross-sectional views of various modified versions of the electrode assembly 10. Only two electrodes are shown for convenience, but the electrode assemblies can include any number of electrodes stacked in an alternate manner.

Referring to FIG. 2A, an electrode assembly includes a positive electrode 230a and a negative electrode 220a. The negative electrode 220a includes a negative electrode active material layer 223 disposed only on one surface of a negative electrode current collector 222. Inorganic insulating separator coating layers 240 are disposed on outer surfaces of the current collector 222 and active material layer 223. The positive electrode active material layer 233 is disposed on a surface of a positive electrode current collector 232 that faces the negative electrode 220a. An inorganic insulating separator coating layer 240 is not formed on the positive electrode 230a.

Referring to FIG. 2B, an electrode assembly includes a positive electrode 230b and a negative electrode 220b. The negative electrode 220b includes a negative electrode active material layer 223 disposed on only one surface of a negative electrode current collector 222. The positive electrode 230b includes a positive electrode active material layer 233 disposed on a surface of a positive electrode current collector 232 that faces the negative electrode 220b. Inorganic insulating separator coating layers 240 are disposed on outer surfaces of the current collector 232 and active material layer 233.

Referring to FIG. 2C, an electrode assembly includes a positive electrode 220c and a negative electrode 230c. The positive electrode 220c includes two positive active material layers 223 disposed on opposing sides of a positive electrode current collector 232. Inorganic insulating separator coating layers 240 are disposed on outer surfaces of the positive active material layers 223. The negative electrode 230c includes a negative electrode current collector 232, two negative active material layers 233, and two inorganic insulating separator coating layers 240, in a similar arrangement.. As such, the inorganic insulating separator coating layers 240 are disposed on both the negative electrode 220c and the positive electrode 230c. Thus a probability of a short occurring may be reduced.

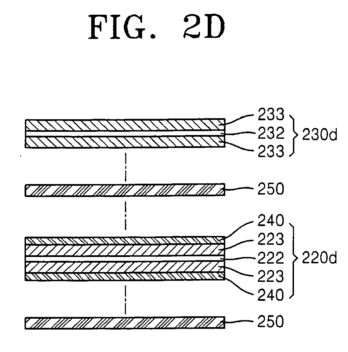

Referring to FIG. 2D, an electrode assembly includes a positive electrode 230d, a negative electrode 220d, and a separator 250 disposed therebetween. The separator 250 may be generally formed of a polyolefine-based material. The negative electrode 220d is similar to the positive electrode 220c. The negative electrode 230d is similar to the negative electrode 230c, except that it does not include the inorganic insulating separator coating layers 240.

The above electrode assemblies can include any number of the positive and negative electrodes. With regard to FIG. 2D, the separators 250 are disposed between each pair of the electrodes. The electrodes are generally alternately stacked to form the electrode assemblies.

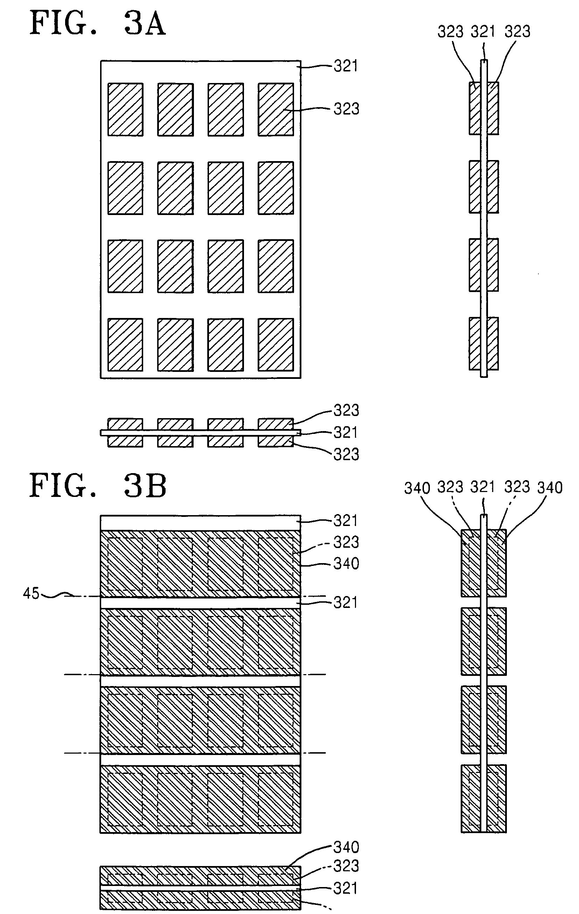

FIGS. 3A through 3D illustrate a method of manufacturing an electrode assembly of a stack-type lithium secondary battery, according to another embodiment of the present invention. FIGS. 3A through 3D each include a plan view, a front view, and a side view of various elements of the electrode assembly 10. In the previous embodiment of FIGS. 1A through 1H, the negative electrode active material layer 23 includes an active material having a potential difference of 0.5 V or more with respect to lithium, so that the negative electrodes 20 and the positive electrodes 30 may be the same size and shape. Unlike FIGS. 1A through 1H, although a negative electrode active material layer 323 does not include an active material having a potential difference of at least 0.5 V with respect to lithium, sizes (surface areas) and/or shapes of a negative electrode 320 and a positive electrode (not illustrated) may be substantially the same.

An inorganic insulating separator coating layer 340 may be coated on the positive electrode and the negative electrode 320, so as to cover a positive electrode active material layer (not illustrated) and the corresponding negative electrode active material layer 323. The negative electrode and the positive electrode active material layers may include general active materials. For example, the negative electrode active material layer 323 may include, for example, graphite as a negative active material. The positive electrode active material layer may include, for example, cobalt oxide Ilithium (LiCoO₂) as a positive active material. The active materials are not limited to the above examples and may include silicon-based materials, tin-based materials, aluminum-based materials, and germanium-based materials.

The active material may as be lithium titanium oxide (LTO), in addition to the above described active materials. If the negative electrode and the positive electrode active material layers do not include an active material having a potential difference of at least 0.5 V with respect to lithium, such as lithium titanium oxide (LTO), lithium may be extracted. As such, the inorganic insulating separator coating layer 340 may be coated to cover the negative electrode and the positive electrode active material layers 323.

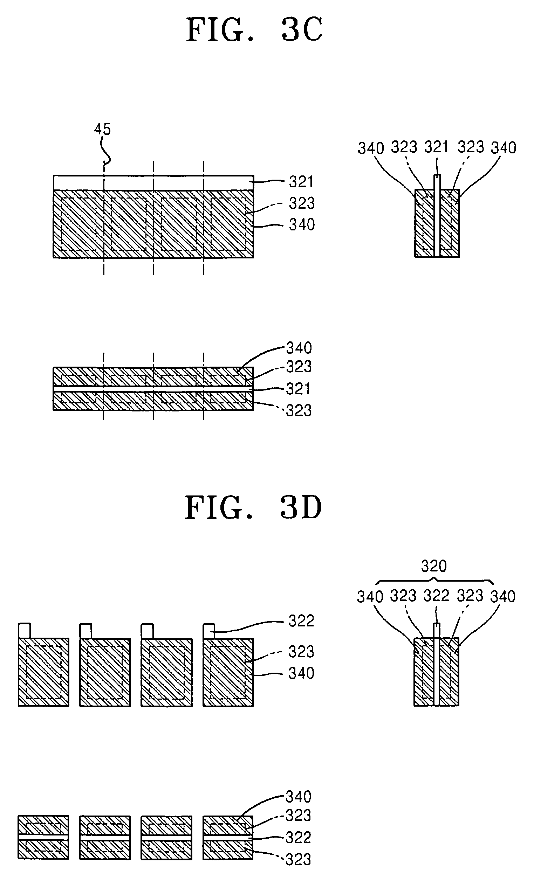

Here, the inorganic insulating separator coating layer 340 may include, for example, a ceramic material. The inorganic insulating separator coating layer 340 may absorb extracted lithium. Thus, the coating layer 340 prevents the negative electrode and the positive electrode active material layers from directly contacting lithium ions, to thereby substantially reduce the lithium extraction problem. For example, referring to FIG. 3D, the inorganic insulating separator coating layer 340 completely covers the negative electrode active material layer 323, so that the negative electrode active material layer 323 does not directly contact an electrolyte. Accordingly, if the negative electrode and the positive electrode active material layers do not include an active material having a potential difference of at least 0.5 V with respect to lithium, and thus, lithium may be extracted, the extracted lithium may be contained in the inorganic insulating separator coating layers 340.

Here, the inorganic insulating separator coating layer 340 may also operate as a separator to prevent a short between the negative electrode 320 and the positive electrode. Also, as the inorganic insulating separator coating layer 340 may include the extracted lithium, a size of the negative electrode active material layer 323 may be the same that of the positive electrode active material layer. Accordingly, sizes (surface areas) and/or shapes of the negative electrode 320 and the positive electrode may be substantially the same, so that the negative electrode 320 and the positive electrode may be easily arranged and the manufacturing efficiency the electrode assembly 10 is improved.

Hereinafter, a method of manufacturing the electrode assembly 10, according to an embodiment of the present invention, will be described. Referring to FIG. 3A, negative electrode active material layers 323 may be formed on a sheet of negative electrode current collector material 321, by coating a slurry, including a binding resin (first binder) and an active material, on the sheet 321.

Referring to FIG. 3B, inorganic insulating separator coating layers 340 are formed on the negative electrode active material layers 323. The inorganic insulating separator coating layers 340 completely cover the exposed surfaces of the negative electrode active material layers 323. The inorganic insulating separator coating layer 340 includes a binding resin (second binder). The first and second binders may be water-based or oil-based binders. If the first binder is a water-based binder, the second binder may be an oil-based binder and vice versa. In FIG. 3B, after the inorganic insulating separator coating layers 340 are formed, the resultant is cut along a cutting line 45, to obtain the structure shown in FIG. 3C.

The resultant of FIG. 3C is cut along the cutting lines 45, to obtain stack-type negative electrodes 320, as shown in FIG. 3D. The positive electrode may be manufactured in a similar manner as in the negative electrode 320. Then, the negative electrode 320 and the positive electrode manufactured are alternately stacked, thereby completing manufacturing of the electrode assembly 10 of the stack-type lithium secondary battery.

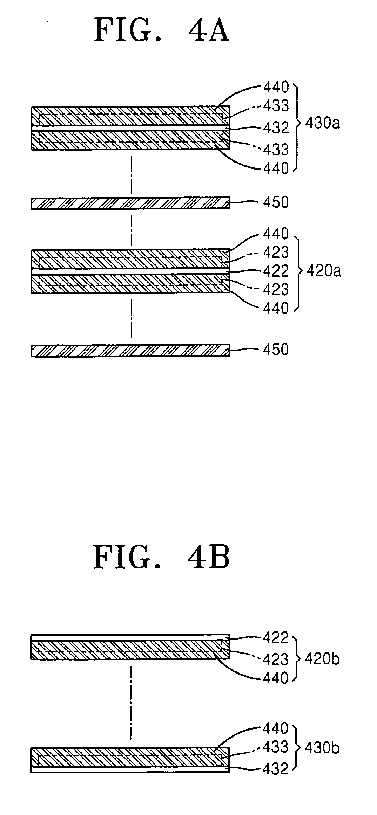

FIGS. 4A and 4B are cross-sectional views of modified versions of the electrode assembly 10 of FIG. 3D. Referring to FIG. 4A, an electrode assembly is provided that includes a negative electrode 420a, a positive electrode 430a, and a separator 450 disposed therebetween. The separator 450 may be generally formed of a polyolefine-based material. The negative electrode 420a includes negative electrode active material layers 423 disposed on opposing surfaces of a negative electrode current collector 422. Inorganic insulating separator coating layers 440 completely cover the active material layers 423.

FIG. 4B illustrates and electrode assembly including a negative electrode 420b and a positive electrode 430b. The negative electrode includes a negative active material layer 423 coated on only one surface of a current collector 422. The active material layer 423 is completely covered with an inorganic insulating separator coating layer 440. The positive electrode 430b includes a positive active material layer 433, a current collector 432, and a coating layer 440, in a similar arrangement. The modified electrode assemblies of FIGS. 4A and 4B are not limited thereto, and may be varied by one of ordinary skill in the art.

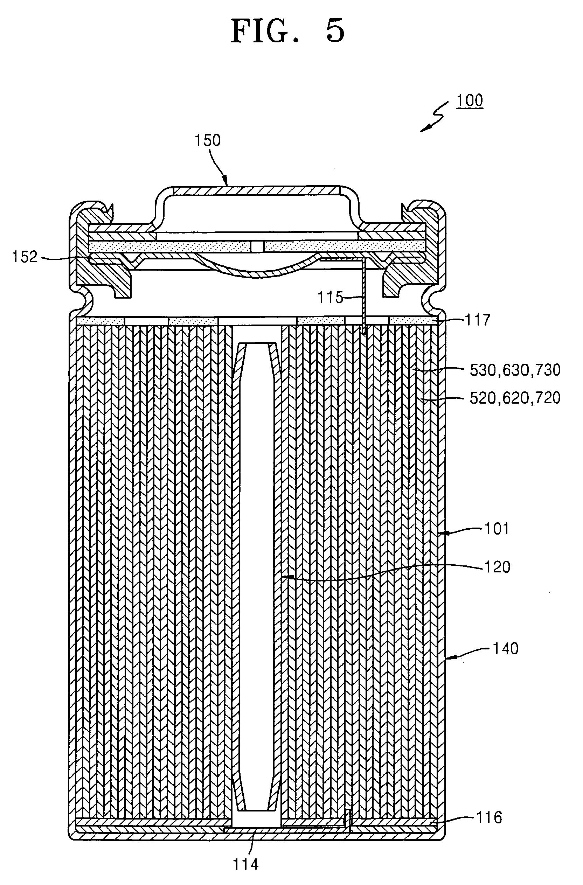

FIG. 5 is a cross-sectional view of a cylindrical lithium secondary battery 100 including a rolled electrode assembly 101, according to aspects of the present invention. Referring to FIG. 5, the cylindrical lithium secondary battery 100 includes the electrode assembly 101, a center pin 120, a can 140, and a cap assembly 150. The electrode assembly 101 includes a positive electrode and a negative electrode that are wound together. The negative electrode may be a negative electrode 520, 620, or 720, and the positive electrode may be a negative electrode 530, 630, or 730, respectively.

An inorganic insulating separator coating layer may be formed on at least one of the negative and positive electrodes, such that a separate separator may not needed. If the inorganic insulating separator coating layer is not formed, a general separator (not shown) may be disposed between the electrodes. The separator may have a larger width than the electrodes, to prevent a short between the electrodes. However, if the inorganic insulating separator coating layer is formed, the coating layer need not have a larger width than the electrodes, because the coating layer moves along with an electrode and thus, a short between the electrodes may be prevented.

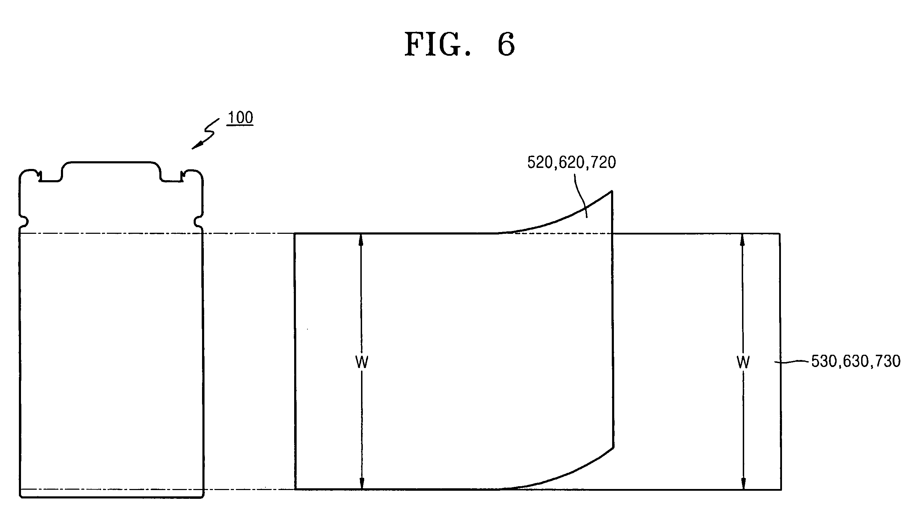

Referring to FIGS. 5 and 6, the width W of the negative and positive electrodes, which extends between an upper insulating plate 117 and a lower insulating plate 116 of the battery 100, may be the same. As the widths W of the negative and positive electrodes are substantially the same, it is easy to wind the electrode assembly 101. However, in some embodiments the lengths of the negative and positive electrodes may be different. For example, when the electrodes are wound in the form of jelly roll, the length of one of the electrodes may be greater than that of the other, such that the electrodes properly face one another, when wound.

The electrode assembly 101 is cylindrical and is included in the can 140, which is also cylindrical. The negative electrode may include a copper (Cu) foil and the positive electrode may include an aluminum (Al) foil, as current collectors. A negative electrode tap 114 may be welded to the negative electrode and a bottom surface 142 of the can. A positive electrode tap 115 may be welded to the positive electrode and a cap down 152 of the cap assembly 150. The negative electrode tap 114 may be formed of a nickel (Ni) material, and the positive electrode tap 115 may be formed of an aluminum (Al) material. The center pin 120 is fixed at the center of the electrode assembly 101, to internally support the electrode assembly 101, during charging and discharging of the battery 100.

The negative electrode includes a negative electrode active material layer. The negative active material includes an active material having a potential difference of at least 0.5 V with respect to lithium, namely a lithium titanium oxide (LTO). As LTO is included in the negative electrode active material layer, lithium is not extracted. Thus, the width W of the negative electrode active material layer need not be larger than that of a positive electrode active material layer of the positive electrode, to prevent lithium from being extracted. That is, the width W of the negative electrode active material layer and the positive electrode active material layer may be substantially the same. Accordingly, the negative electrode and the positive electrode may be precisely wound. Here, the fact that the widths of the negative electrode and the positive electrode are the same as each other denotes that the width of the negative electrode current collector and the positive electrode current collector are the same.

One or both of the negative positive electrodes may include the inorganic insulating separator coating layer. Here, the inorganic insulating separator coating layer may be disposed on the outermost surface of the negative electrodes 520, 620, and 720. The inorganic insulating separator coating layer is coated, so that a short between the negative electrodes 520, 620, and 720, and the corresponding positive electrodes 530, 630, 730 may be prevented, without a separate separator, and lithium ions may be transferred. The inorganic insulating separator coating layer may include, for example, a ceramic material. The inorganic insulating separator coating layer including ceramic absorbs extracted lithium. Accordingly, a lithium extraction problem may be solved by the inorganic insulating separator coating layer.

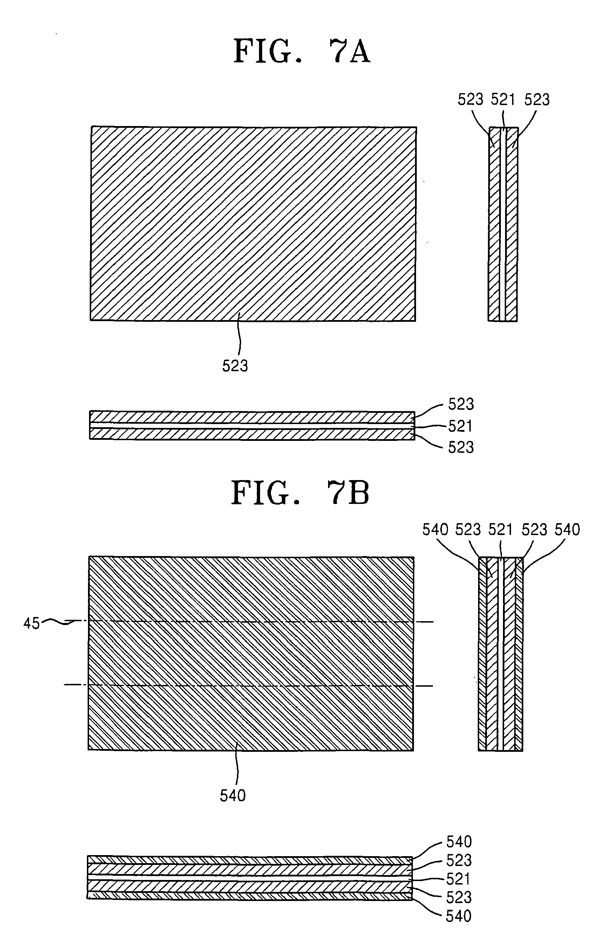

FIGS. 7A through 7E illustrate a method of manufacturing the electrode assembly 101 according to another embodiment of the present invention. FIGS. 7A through 7E each include a plan view, a front view, and a side view of the electrodes 520, 530, during the formation thereof.

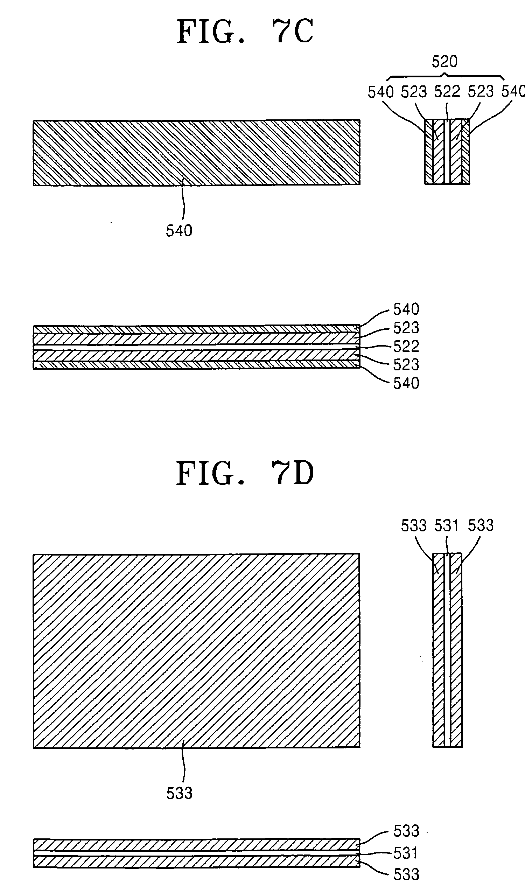

Referring to FIG. 7A, the negative electrode active material layer 523 may be disposed on a sheet of negative electrode current collector material 521. A slurry, including a binding resin and an active material may be coated on the opposing sides of the sheet 521, to form negative electrode active material layers 523. Referring to FIG. 7B, inorganic insulating separator coating layer 540 are disposed on the negative electrode active material layers 523. The inorganic insulating separator coating layer 540 and the negative electrode active material layer 523 each include different binders. The binders may be a water-based binder or an oil-based binder, so long as they are different from one another. In FIG. 7B, after the inorganic insulating separator coating layer 540 is coated, the resultant is cut along the cutting line 45, to form and the negative electrode 520, as shown in FIG. 7C.

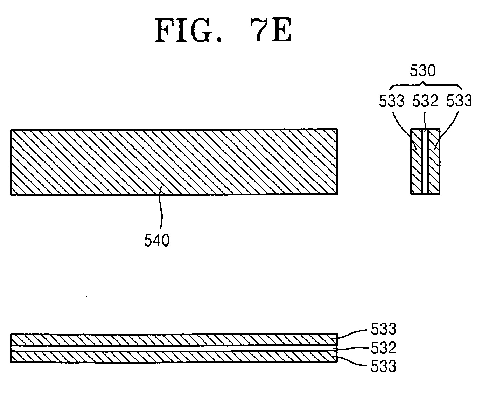

Referring to FIG. 7D, the positive electrode active material layer 533 may be disposed on a sheet of positive electrode current collector material 531. A slurry, including a binder and an active material may be coated on opposing sides of the sheet 531, to form positive electrode active material layers 533. The binder of the positive electrode active material layer 533 may be a water-based binder or an oil-based binder, in opposition to the binder of the inorganic insulating separator coating layer 540. The resultant is cut to form the positive electrode 530 shown in FIG. 7E.

The negative electrode 520 and the positive electrode 530 may be wound together, into a jellyroll shape. The negative electrode 520 and the positive electrode 530 may be wound starting from the ends thereof, or starting from the centers thereof. The structures of the negative electrode 520 and the positive electrode 530 are not limited to FIGS. 7A through 7E and may vary.

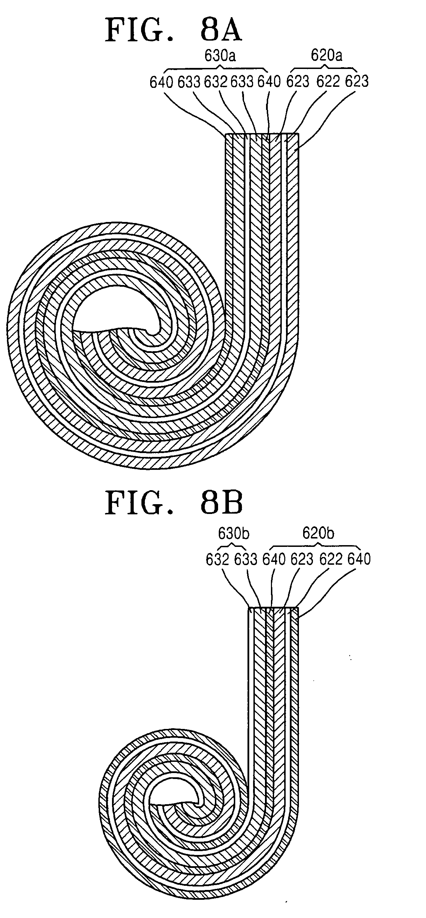

FIGS. 8A through 8D are plan views of partially wound electrode assemblies, according to aspects of the present disclosure. Referring to FIG. 8A, an electrode assembly includes a positive electrode 630a and a negative electrode 620a. The positive electrode 630a includes inorganic insulating separator coating layers 640, active material layers 633, and a current collector 632. The negative electrode 620a includes active material layers 623 disposed on opposing sides of a current collector 622.

Referring to FIG. 8B, an electrode assembly includes a positive electrode 630b and a negative electrode 620b. The negative electrode 620b includes inorganic insulating separator coating layers 640, one active material layer 623, and a current collector 622. The positive electrode 620b includes an active material layer 633 disposed on one side of a current collector 632. A short between a negative electrode 620b and a positive electrode 630b may be prevented, by the inorganic insulating separator coating layer 640 disposed on the outermost surface of the negative electrode 620b, and lithium ions may be transferred.

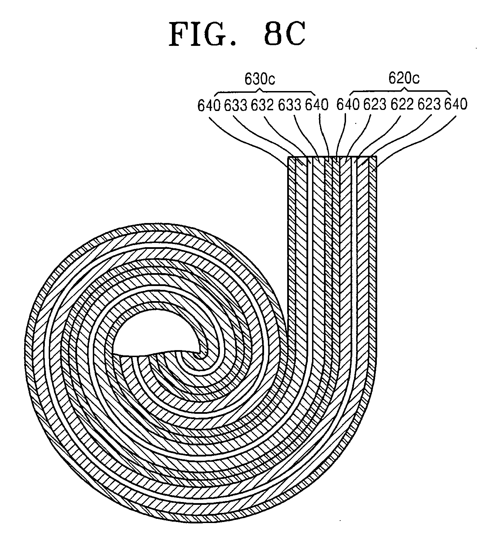

Referring to FIG. 8C, an electrode assembly includes a positive electrode 630c and a negative electrode 620c. The positive electrode 630c is substantially equivalent to the positive electrode 630a. The negative electrode 620c includes a current collector 622, two active material layers 623, and two insulating separator coating layers 640. The coating layer 640 may be each disposed on the outermost surfaces of the negative electrode 620c and the positive electrode 630c.

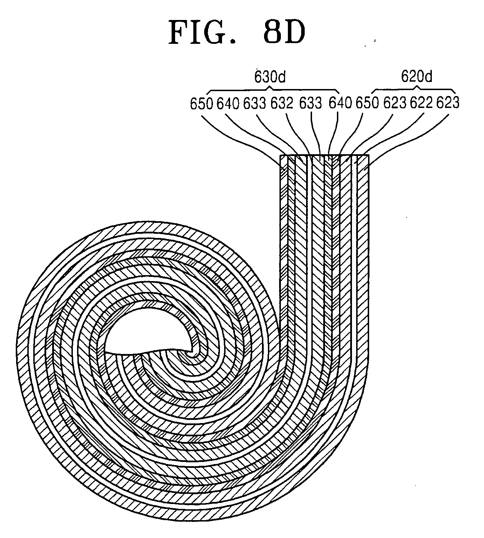

Referring to FIG. 8D, an electrode assembly includes a positive electrode 630d and a negative electrode 620d. The positive electrode 630d is substantially equivalent to the positive electrode 630a. The negative electrode 620d is substantially equivalent to the negative electrode 620a. The electrode assembly further includes a separator 650 interposed between the negative electrode 620d and the positive electrode 630d. Here, the separator 650 may be formed of a polyolefine-based material.

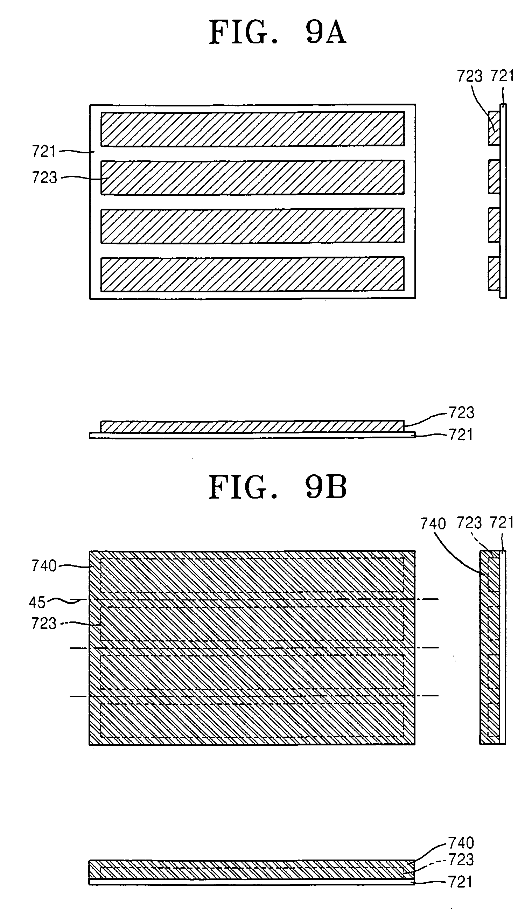

FIGS. 9A through 9C each include a plan view, a front view, and a side view of the manufacturing process of an electrode assembly 101, according to another embodiment of the present invention. Referring to FIG. 9A, the negative electrode active material layer 723 may be disposed on a sheet of negative electrode current collector material 721. Here, a slurry including a binder and an active material may be coated to form the negative electrode active material layer 723.

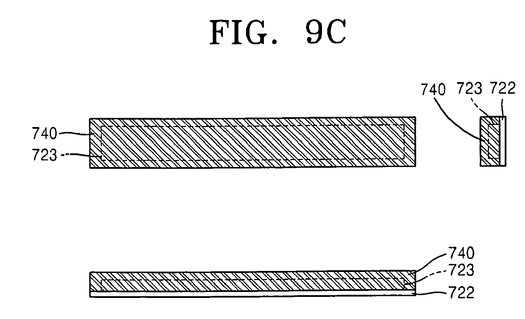

Referring to FIG. 9B, an inorganic insulating separator coating layer 740 is formed, so as to completely cover the exposed surfaces of the negative electrode active material layer 723. The inorganic insulating separator coating layer 740 may include a binder. A binder of the negative electrode active material layer 723 and the binder of the inorganic insulating separator coating layer 740 are different ones of a water-based binder or an oil-based binder. After the inorganic insulating separator coating layer 740 is formed, the resultant is cut along the cutting line 45, to produce a negative electrode 720, as shown in FIG. 9C.

A positive electrode (not shown) may be manufactured in a similar manner as in the negative electrode 720. The positive electrode and the negative electrode may generally be the same size and shape, although one may be longer than the other to account for the winding of the electrode assembly 101. Here, positive electrode and inorganic insulating separator coating layer.

The electrodes are positioned such that negative electrode active material layer 723 and the positive electrode active material layer face each other, and then the electrodes are wound. The vertical widths of the negative electrode 720 and the positive electrode are substantially the same as each other.

The electrode assembly 101 is not limited thereto and may vary. For example, the active material layers may be disposed on both sides of the current collectors. Also, a separator may be interposed between the negative electrode 720 and the positive electrode. The separator may be generally formed of a polyolefine-based material.

The process illustrated in FIGS. 9A through 9C is different from the process illustrated in FIGS. 7A through 7E, in terms of using a different negative electrode active material layer. That is, the negative electrode active material layer 523 includes an active material having a potential difference of at least 0.5 V with respect to ithium, namely LTO. The negative electrode active material layer 723 of FIGS. 9A through 9C includes an active material having a potential difference of 0.5 V or less with respect to lithium. If lithium is extracted from the negative electrode active material layer 723, the extracted lithium is contained within the inorganic insulating separator coating layer 740.

The negative electrode active material layer 723 may include a negative active material, for example, graphite. The positive electrode active material layer may include a positive active material, for example, cobalt oxide lithium (LiCoO₂). However, the active materials are not limited to the above examples. If the negative electrode active material layer 723 does not include an active material such as LTO, lithium may be extracted. As such the inorganic insulating separator coating layer 740 may be coated to completely cover the negative electrode active material layer 723.

The inorganic insulating separator coating layer 740 may include, for example, a ceramic material to prevent lithium extraction. Thus, lithium ions are prevented from directly contacting the negative electrode active material layer 723 and thus, the lithium extraction problem may be solved. The inorganic insulating separator coating layer 740 may also operate as a separator, to prevent a short between the negative electrode 720 and the positive electrode, while being permeable to lithium ions. Also, as the inorganic insulating separator coating layer 740 may prevent lithium extraction, the sizes of the negative electrode active material layer 723 and the positive electrode active material layer 733 may be generally the same. Accordingly, sizes (surface areas) of the negative electrode 720 and the positive electrode may be the generally the same, thereby improving processability..

Although embodiments of the present invention have been shown and described, it would be appreciated by those skilled in the art that changes may be made in these embodiments, without departing from the the present invention, the scope of which is defined in the claims.

## Claims

1. A lithium secondary battery comprising:
a first electrode (20) comprising a first electrode active material layer (23) disposed on a first current collector (22);
a second electrode (30) comprising a second electrode active material layer (33) disposed on a second current collector (32);
an electrolyte; and
an inorganic insulating separator coating layer (40) coated on the first electrode active material layer (23), to separate the first (20) and second electrodes (30), wherein the first (23) and second electrode (33) active material layers have substantially the same surface areas, and the first (20) and second electrodes (30) are substantially the same length and width and wherein the second electrode active material layer (33) comprises a lithium titanium oxide (LTO).

2. A lithium secondary battery according to claim 1, wherein the inorganic insulating separator coating layer (40) comprises a ceramic material.

3. A lithium secondary battery according to claim 2, wherein the porosity of the inorganic insulating separator coating layer (40) is from about 10 % to about 50 %.

4. A lithium secondary battery according to any preceding claim, wherein the inorganic insulating separator coating layer (40) comprises:
a first coating layer disposed directly on the first electrode active material layer (23); and
a second coating layer disposed directly on the second electrode active material layer (33).

5. A lithium secondary battery according to any preceding claim, wherein the first electrode active material layer (23) and the second electrode active material layer (33) each comprise a different one of an oil-based binder and a water-based binder.

6. A lithium secondary battery according to any preceding claim, wherein the inorganic insulating separator coating layer (40) completely covers the surfaces of the first active material layer (23) that do not contact the first current collector (22).

7. A lithium secondary battery according to any preceding claim, further comprising a separator (250) interposed between the first electrode (220b) and the second electrode (230b).

8. A lithium secondary battery according to any preceding claim, wherein the first electrode (20) comprises a said first electrode active material layer (23) on each side of the first current collector (22);
the second electrode (30) comprises a said second electrode active material layer (33) on each side of the second current collector (32); and
a said inorganic insulating separator coating layer (40) is coated directly on each first electrode active material layer (23).

9. A lithium secondary battery according to any preceding claim, further comprising an inorganic insulating separator coating layer (40) coated on the second electrode active material layer (33).

10. A lithium secondary battery according to any preceding claim wherein the first (20) and second (30) electrodes are rolled together, with the inorganic insulating separator coating layer disposed therebetween.

11. The lithium secondary battery according to any preceding claim, wherein the amounts of the active materials of the first (23) and second (33) electrode active material layers are substantially the same.

12. A lithium secondary battery according to any preceding claim, comprising a plurality of the said first (20) and second (30) electrodes alternately disposed in a stack,
wherein the areas and/or shapes of the first (20) and second (30) electrodes are substantially the same.

## Patentansprüche

1. Lithium-Sekundärbatterie, umfassend:
eine erste Elektrode (20), umfassend eine erste Elektrodenaktivmaterialschicht (23), welche auf einem ersten Stromkollektor (22) angeordnet ist;
eine zweite Elektrode (30), umfassend eine zweite Elektrodenaktivmaterialschicht (33), welche auf einem zweiten Stromkollektor (32) angeordnet ist;
einen Elektrolyt; und
eine anorganische isolierende Trennüberzugsschicht (40), welche auf der ersten Elektrodenaktivmaterialschicht (23) aufgebracht ist, um die erste (20) und die zweite Elektrode (30) zu trennen, wobei die erste (23) und die zweite Elektrodenaktivmaterialschicht (33) im Wesentlichen dieselbe Oberfläche aufweisen, und die erste (20) und zweite Elektrode (30) im Wesentlichen die selbe Länge und Breite aufweisen und wobei die zweite Elektrodenaktivmaterialschicht (33) ein Lithium-TitanOxid (LTO) umfasst.

2. Lithium-Sekundärbatterie nach Anspruch 1, wobei die anorganische isolierende Trennüberzugsschicht (40) ein keramisches Material umfasst.

3. Lithium-Sekundärbatterie nach Anspruch 2, wobei die Porosität der anorganischen isolierenden Trennüberzugsschicht (40) etwa 10% bis etwa 50% beträgt.

4. Lithium-Sekundärbatterie nach einem der vorhergehenden Ansprüche, wobei die anorganische isolierende Trennüberzugsschicht (40) umfasst:
eine erste Überzugsschicht, welche direkt auf der ersten Elektrodenaktivmaterialschicht (23) angeordnet ist; und
eine zweite Überzugsschicht, welche direkt auf der zweiten Elektrodenaktivmaterialschicht (33) angeordnet ist.

5. Lithium-Sekundärbatterie nach einem der vorhergehenden Ansprüche, wobei die erste Elektrodenaktivmaterialschicht (23) und die zweite Elektrodenaktivmaterialschicht (33) jeweils ein unterschiedliches von einem Öl-basierten Bindemittel und einem Wasserbasierten Bindemittel umfassen.

6. Lithium-Sekundärbatterie nach einem der vorhergehenden Ansprüche, wobei die anorganische isolierende Trennüberzugsschicht (40) die Oberflächen der ersten Aktivmaterialschicht (23) vollkommen überzieht, welche keinen Kontakt zu dem ersten Stromkollektor (22) aufweisen.

7. Lithium-Sekundärbatterie nach einem der vorhergehenden Ansprüche, ferner umfassend einen Separator (250), welcher zwischen der ersten Elektrode (220b) und der zweiten Elektrode (230b) angeordnet ist.

8. Lithium Sekundärbatterie nach einem der vorhergehenden Ansprüche, wobei die erste Elektrode (20) eine erste Elektrodenaktivmaterialschicht (23) auf jeder Seite des ersten Stromkollektors (22) umfasst;
die zweite Elektrode (30) eine zweite Elektrodenaktivmaterialschicht (33) auf jeder Seite des zweiten Stromkollektors (32) umfasst; und
die anorganische isolierende Trennüberzugsschicht (40) direkt auf der ersten Elektrodenaktivmaterialschicht (23) aufgebracht ist.

9. Lithium-Sekundärbatterie nach einem der vorhergehenden Ansprüche, ferner umfassend eine anorganische isolierende Trennüberzugsschicht (40), welche auf der zweiten Elektrodenaktivmaterialschicht (33) aufgebracht ist.

10. Lithium-Sekundärbatterie nach einem der vorhergehenden Ansprüche, wobei die erste (20) und zweite (30) Elektrode zusammengerollt sind, wobei die anorganische isolierende Trennüberzugsschicht dazwischen angeordnet ist.

11. Lithium-Sekundärbatterie nach einem der vorhergehenden Ansprüche, wobei die Mengen an aktiven Materialien der ersten (23) und zweiten (33) Elektrodenaktivmaterialschicht im Wesentlichen gleich sind.

12. Lithium-Sekundärbatterie nach einem der vorhergehenden Ansprüche, umfassend eine Mehrzahl der ersten (20) und zweiten (30) Elektrode, welche abwechselnd in einem Stapel angeordnet sind,
wobei die Oberflächen und/oder die Formen der ersten (20) und zweiten (30) Elektroden im Wesentlichen gleich sind.

## Revendications

1. Batterie secondaire au lithium comprenant :
une première électrode (20) comprenant une première couche (23) de matériau actif d'électrode disposée sur un premier collecteur de courant (22),
une seconde électrode (30) comprenant une seconde couche (33) de matériau actif d'électrode disposée sur un second collecteur de courant (32),
un électrolyte, et
une couche isolante de revêtement inorganique de séparation (40) revêtue sur la première couche (23) de matériau actif d'électrode pour séparer les première (20) et seconde (30) électrodes, dans laquelle les première (23) et seconde (33) couches de matériau actif d'électrode ont sensiblement les mêmes superficies, les première (20) et seconde (30) électrodes ont sensiblement la même longueur et la même largeur et dans laquelle la seconde couche de matériau actif d'électrode (33) comprend un oxyde de lithium et de titane (LTO).

2. Batterie secondaire au lithium selon la revendication 1, dans laquelle la couche isolante de revêtement inorganique de séparation (40) comprend un matériau de céramique.

3. Batterie secondaire au lithium selon la revendication 2, dans laquelle la porosité de la couche isolante de revêtement inorganique de séparation (40) est comprise entre environ 10 % et environ 50 %.

4. Batterie secondaire au lithium selon l'une quelconque des revendications précédentes, dans laquelle la couche isolante de revêtement inorganique de séparation (40) comprend :
une première couche de revêtement disposée directement sur la première couche (23) de matériau actif d'électrode et
une seconde couche de revêtement disposée directement sur la seconde couche (33) de matériau actif d'électrode.

5. Batterie secondaire au lithium selon l'une quelconque des revendications précédentes, dans laquelle la première couche (23) de matériau actif d'électrode comprend l'un d'un liant à base d'huile et d'un liant à base d'eau et la seconde couche (33) de matériau actif d'électrode comprend l'autre respectif d'un liant à base d'huile et d'un liant à base d'eau.

6. Batterie secondaire au lithium selon l'une quelconque des revendications précédentes, dans laquelle la couche isolante de revêtement inorganique de séparation (40) recouvre complètement les surfaces de la première couche de matériau actif (23) qui ne sont pas en contact avec le premier collecteur de courant (22).

7. Batterie secondaire au lithium selon l'une quelconque des revendications précédentes, comprenant en plus un séparateur (250) interposé entre la première électrode (220b) et la seconde électrode (230b).

8. Batterie secondaire au lithium selon l'une quelconque des revendications précédentes, dans laquelle la première électrode (20) comprend une dite première couche (23) de matériau actif d'électrode sur chaque côté du premier collecteur de courant (22),
la seconde électrode (30) comprend une dite seconde couche (33) de matériau actif d'électrode sur chaque côté du second collecteur de courant (32), et
une dite couche isolante de revêtement inorganique de séparation (40) est revêtue directement sur chaque première couche (23) de matériau actif d'électrode.

9. Batterie secondaire au lithium selon l'une quelconque des revendications précédentes, comprenant en plus une couche isolante de revêtement inorganique de séparation (40) revêtue sur la seconde couche (33) de matériau actif d'électrode.

10. Batterie secondaire au lithium selon l'une quelconque des revendications précédentes, dans laquelle les première (20) et seconde (30) électrodes sont laminées ensemble, avec la couche isolante de revêtement inorganique de séparation disposée entre celles-ci.

11. Batterie secondaire au lithium selon l'une quelconque des revendications précédentes, dans laquelle les quantités des matériaux actifs des première (23) et seconde (33) couches de matériau actif d'électrode sont sensiblement les mêmes.

12. Batterie secondaire au lithium selon l'une quelconque des revendications précédentes, comprenant une pluralité de dites premières (20) et secondes (30) électrodes disposées alternativement dans un empilement,
dans laquelle les surfaces et/ou les formes des premières (20) et secondes (30) électrodes sont sensiblement identiques.
